(19) Europäisches Patentamt
European Patent Office
Office européen des brevets

(11) **EP 3 470 247 B1**

(12) **EUROPÄISCHE PATENTSCHRIFT**

(45) Veröffentlichungstag und Bekanntmachung des Hinweises auf die Patenterteilung:
**05.08.2020   Patentblatt 2020/32**

(51) Int Cl.:
***B60D 1/36*** *(2006.01)*      ***G05D 1/02*** *(2020.01)*

(21) Anmeldenummer: **18199569.7**

(22) Anmeldetag: **10.10.2018**

(54) **VERFAHREN ZUR UNTERSTÜTZUNG EINES KUPPLUNGSVORGANGS**

METHOD FOR ASSISTING A COUPLING PROCEDURE

PROCÉDÉ DE SUPPORT D'UN PROCESSUS D'ATTELAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2017   DE 102017218381**

(43) Veröffentlichungstag der Anmeldung:
**17.04.2019   Patentblatt 2019/16**

(73) Patentinhaber: **Deere & Company**
**Moline, IL 61265 (US)**

(72) Erfinder: **Billich, Manuel**
**68163 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
**EP-A1- 1 238 577         WO-A1-98/33103**
**US-A1- 2006 261 574   US-A1- 2006 267 745**
**US-B1- 7 396 035**

**Beschreibung**

Die Erfindung betrifft ein Verfahren zur Unterstützung eines Kupplungsvorgangs zwischen einem landwirtschaftlichen Nutzfahrzeug und einem daran anzubringenden Anbaugerät.

In diesem Zusammenhang geht aus der US 2010/0212170 A1 ein System hervor, das einen Fahrer dabei unterstützt, einen Anhänger an einem Fahrzeug anzukuppeln. Das System umfasst drei punktförmige Lichtquellen, die ein Lichtmuster auf einer reflektierenden Oberfläche des anzubringenden Anhängers derart erzeugen, dass dieses in einem einzelnen Lichtpunkt konvergiert, sobald der Anhänger eine zum Ankuppeln geeignete Position gegenüber dem Fahrzeug einnimmt.

Eine Verwendung des bekannten Systems bietet sich vorrangig im PKW-Bereich an, unter ungünstigen Umgebungsbedingungen, wie sie typischerweise im landwirtschaftlichen Bereich anzutreffen sind, besteht hingegen die Möglichkeit, dass aufgrund von Verschmutzungen oder Sichtbeeinträchtigungen die Lichtpunkte nicht oder nur unzureichend auf der Oberfläche des anzubringenden Anbaugeräts erkennbar sind.

Die EP 1 238 577 A1 wird als nächstliegender Stand der Technik angesehen. Hierdurch ist ein Verfahren zur Unterstützung eines Kupplungsvorgangs zwischen einem landwirtschaftlichen Nutzfahrzeug und einem daran anzubringenden Anbaugerät bekannt, bei dem mittels einer fahrzeugseitigen ersten Lasereinheit ein erster Laserlichtstrahl und mittels einer fahrzeugseitigen zweiten Lasereinheit ein zweiter Laserlichtstrahl erzeugt wird wobei die Laserlichtstrahlen zur Durchführung des Kupplungsvorgangs mit einem Kupplungspunkt und/oder einem den Kupplungspunkt charakterisierenden Bezugspunkt am Anbaugerät in Übereinstimmung gebracht werden.

Es ist daher Aufgabe der vorliegenden Erfindung, ein bezüglich der Verwendung mit landwirtschaftlichen Nutzfahrzeugen angepasstes Verfahren der eingangs genannten Art anzugeben.

Diese Aufgabe wird durch ein Verfahren zur Unterstützung eines Kupplungsvorgangs zwischen einem landwirtschaftlichen Nutzfahrzeug und einem daran anzubringenden Anbaugerät mit den Merkmalen des Patentanspruchs 1 gelöst.

Das Verfahren zur Unterstützung eines Kupplungsvorgangs zwischen einem landwirtschaftlichen Nutzfahrzeug und einem daran anzubringenden Anbaugerät sieht vor, dass mittels einer fahrzeugseitigen ersten Lasereinheit ein erster Vertikallichtfächer und mittels einer fahrzeugseitigen zweiten Lasereinheit ein zweiter Vertikallichtfächer erzeugt wird, wobei die Vertikallichtfächer zur Durchführung des Kupplungsvorgangs mit einem Kupplungspunkt und/oder einem den Kupplungspunkt charakterisierenden Bezugspunkt am Anbaugerät in Übereinstimmung gebracht werden.

Die solchermaßen entlang des Erdbodens sowie im Bereich des Kupplungs- und/oder Bezugspunkts am Anbaugerät projizierte vertikale Lichtmarkierung erlaubt es, durch Anvisieren des Bezugs- und/oder Kupplungspunkts am Anbaugerät eine zur Durchführung des Kupplungsvorgangs einzunehmende bzw. zu messende Lage des Bezugs- und/oder Kupplungspunkts relativ zu einer damit korrespondierenden Bezugs- und/oder Anbringungsstelle am landwirtschaftlichen Nutzfahrzeug auch unter ungünstigen Bedingungen visuell erkennbar zu machen. Die vertikale Lichtmarkierung kann insoweit als mit dem Auge gut erfassbarer Leit- bzw. Messstrahl dienen. Die beiden Lasereinheiten arbeiten hierzu im sichtbaren Wellenlängenbereich, wobei es sich um gängige Linienlaser handelt, die eine linienhafte Lichtmarkierung in vertikaler Richtung auf die sie umgebenden Oberflächen projizieren.

Weitere vorteilhafte Ausgestaltungen des erfindungsgemäßen Verfahrens gehen aus den Unteransprüchen hervor.

Insbesondere ist es möglich, dass die beiden Vertikallichtfächer derart abgestrahlt werden, dass der erste Vertikallichtfächer mit einer Mittellängsachse des landwirtschaftlichen Nutzfahrzeugs zusammenfällt und der zweite Vertikallichtfächer zu diesem parallel versetzt durch eine davon beabstandete Anbringungsstelle des landwirtschaftlichen Nutzfahrzeugs verläuft.

In diesem Fall kann das Anbaugerät zur Anbringung an einem Dreipunkt-Kraftheber eines als Traktor ausgebildeten landwirtschaftlichen Nutzfahrzeugs zwei rechte und linke untere sowie einen mittigen oberen Kupplungspunkt aufweisen. Die beiden Vertikallichtfächer werden durch entsprechendes Rangieren des landwirtschaftlichen Nutzfahrzeugs gegenüber dem daran anzubringenden Anbaugerät zunächst derart ausgerichtet, dass die mittels des ersten Vertikallichtfächers projizierte vertikale Lichtmarkierung mit einem mittigen Bezugspunkt am Anbaugerät, beispielsweise dessen mittigen oberen Kupplungspunkt, zusammenfällt, wobei sich aus einem Versatz der mittels des zweiten Vertikallichtfächers projizierten vertikalen Lichtmarkierung gegenüber dem betreffenden unteren Kupplungspunkt visuell auf den Grad einer Fehlstellung des unteren Kupplungspunkts und damit (aufgrund deren fester räumlicher Beziehung zueinander) letztlich auch der übrigen Kupplungspunkte gegenüber den damit korrespondierenden Anbringungsstellen am landwirtschaftlichen Nutzfahrzeug schließen lässt. Zur Durchführung des Kupplungsvorgangs hat der Bediener das landwirtschaftliche Nutzfahrzeug dann lediglich im Sinne einer Verringerung des sichtbaren Versatzes zu rangieren, sodass dieser unmittelbar in die zum Ankuppeln des Anbaugeräts vorgesehene Endposition geleitet wird.

Die vorstehend beschriebene Vorgehensweise lässt sich mit reduzierter Funktionalität auch zum Ankuppeln eines mit einem einzelnen mittigen Kupplungspunkt ausgestatteten Anbaugeräts, beispielsweise eines Anhängers mit einer Deichsel, verwenden, indem die mittels des ersten Vertikallichtfächers entlang der Mittellängsachse projizierte vertikale Lichtmarkierung als Orientierungshilfe bei der Durchführung des Kupplungsvorgangs genutzt wird. In diesem Fall wird das landwirtschaftliche Nutzfahrzeug derart rangiert, dass der Kupplungspunkt stets mit der vertikalen Lichtmarkierung in Übereinstimmung bleibt. Bezugspunkt und Kupplungspunkt fallen in einem solchen Fall örtlich zusammen.

Zusätzlich oder alternativ ist es auch vorstellbar, dass der erste und/oder zweite Vertikallichtfächer mittels einer Stelleinrichtung um eine jeweilige Vertikalachse geschwenkt werden kann.

Die Betätigung der aus einem ersten und zweiten elektrischen Stellmotor bestehenden Stelleinrichtung erfolgt beispielsweise manuell über eine Bedieneinheit, die sich in einer Fahrerkabine des landwirtschaftlichen Nutzfahrzeugs befindet. Der solchermaßen durch Ansteuerung der elektrischen Stellmotoren vorgebbare Schwenkwinkel bezieht sich hierbei auf einen Winkel zwischen der Richtung des jeweiligen Vertikallichtfächers und der Mittellängsachse bzw. einer dazu parallel verlaufenden Längsachse des landwirtschaftlichen Nutzfahrzeugs. Hierbei beträgt der Schwenkwinkel jeweils 0 Grad, wenn der erste Vertikallichtfächer mit der Mittellängsachse bzw. der zweite Vertikallichtfächer mit der dazu parallel verlaufenden Längsachse fluchtet.

Hierbei ist es möglich, dass die beiden Vertikallichtfächer durch Ansteuerung der elektrischen Stellmotoren im Bezugs- und/oder Kupplungspunkt am Anbaugerät in Überschneidung gebracht werden, wobei die zugehörigen Schwenkwinkel der Vertikallichtfächer erfasst werden und davon ausgehend eine zum Ankuppeln des Anbaugeräts vom landwirtschaftlichen Nutzfahrzeug zu durchfahrende Trajektorie berechnet wird.

Die zwischen den beiden Vertikallichtfächern auftretende Parallaxe erlaubt eine exakte Charakterisierung der Lage der Kupplungspunkte am Anbaugerät gegenüber den damit korrespondierenden Anbringungsstellen am landwirtschaftlichen Nutzfahrzeug. Im Falle eines mit linken und rechten unteren Kupplungspunkten sowie einem mittigen oberen Kupplungspunkt ausgestatteten Anbaugeräts wird die vorstehende Erfassung der Schwenkwinkel zunächst für einen Bezugspunkt, beispielsweise den mittigen oberen Kupplungspunkt, und danach für einen der unteren Kupplungspunkte durchgeführt, um auf Grundlage einer modifizierten Berechnung die entsprechende Trajektorie zu bestimmen.

Die zu durchfahrende Trajektorie kann durch Ansteuerung der beiden elektrischen Stellmotoren mittels der beiden Vertikallichtfächer auf den Erdboden projiziert werden.

Die Visualisierung der zu durchfahrenden Trajektorie erleichtert es dem Bediener, das landwirtschaftliche Nutzfahrzeug in die zum Ankuppeln des Anbaugeräts vorgesehene Endposition zu überführen. Beim Rangieren hat dieser lediglich darauf zu achten, dass die mittels der beiden Vertikallichtfächer in deren Schnitt- bzw. Kreuzungsbereich projizierte vertikale Lichtmarkierung mit dem Bezugs- und/oder Kupplungspunkt am Anbaugerät zusammenfällt. Die Berechnung der Trajektorie wird hierbei in vorgegebenen Zeitintervallen aktualisiert, um möglichen fahrtbedingten Abweichungen Rechnung zu tragen.

Da vom Fahrersitz aus unter Umständen der Verlauf der auf den Erdboden projizierten Trajektorie nicht vollständig einsehbar ist, ist es von Vorteil, wenn diese mittels einer Kamera erfasst und auf einer Anzeigeeinrichtung einer Bedienerschnittstelle wiedergegeben wird.

Eine derartige Kamera kann sich im Front- und/oder Heckbereich des landwirtschaftlichen Nutzfahrzeugs befinden, im Falle eines Traktors beispielsweise zur Erfassung der auf den Erdboden projizierten Trajektorie einschließlich der dem Traktor zugeordneten Anbringungsstellen, also eines Dreipunkt-Krafthebers, einer Pick-Up Hitch, einer Kugelkupplung, eines Kupplungsmauls oder dergleichen.

Andererseits besteht auch die Möglichkeit, dass aus der berechneten Trajektorie ein fahrtgeschwindigkeitsabhängig einzuschlagender Lenkwinkel an lenkbaren Rädern des landwirtschaftlichen Nutzfahrzeugs abgeleitet wird.

Die Beeinflussung des Lenkwinkels erfolgt in der Regel über eine in einer Fahrerkabine des landwirtschaftlichen Nutzfahrzeugs vorgesehene Lenkhandhabe in Gestalt eines Lenkrads oder mittels einer autonomen Lenkeinrichtung, wie sie zur Durchführung eines GPS-gesteuerten Betriebs in manchen landwirtschaftlichen Nutzfahrzeugen vorgesehen ist. Während der Durchführung des Kupplungsvorgangs kann die Fahrtgeschwindigkeit entweder manuell seitens des Bedieners vorgegeben werden oder aber bedienerunabhängig im Rahmen einer mit dem erfindungsgemäßen Verfahren verknüpften automatisierten Kupplungsassistenzfunktion.

In diesem Fall ist es denkbar, dass auf Grundlage des abgeleiteten Lenkwinkels entweder über die Bedienerschnittstelle optische, akustische und/oder haptische Lenkempfehlungen ausgegeben werden oder aber der Lenkwinkel fahrtgeschwindigkeitsabhängig durch Ansteuerung der autonomen Lenkeinrichtung nach Initiierung der automatisierten Kupplungsassistenzfunktion bedienerunabhängig eingestellt wird.

Die Lenkempfehlungen werden beispielsweise optisch über die Bedienerschnittstelle in Form von Symbolen oder Klartexthinweisen dargestellt, daneben kann eine Ausgabe von Signaltönen, die abhängig von einer Abweichung von der zu durchfahrenden Trajektorie moduliert werden, oder auch eine Aufschaltung einer haptischen Rückmeldung an der Lenkhandhabe vorgesehen sein. In letzterem Fall kann die Bedienerschnittstelle einen mit der Lenkhandhabe zusammenwirkenden Momentengeber aufweisen, mittels dessen ein einer Abweichung von der zu durchfahrenden Trajektorie entgegenwirkender Lenkwiderstand an der Lenkhandhabe aufgebaut wird.

Einer beeinträchtigten Einsehbarkeit der zu durchfahrenden Trajektorie bzw. der Bezugs- und/oder Kupplungspunkte am Anbaugerät lässt sich auch Rechnung tragen, indem der erste und/oder zweite Vertikallichtfächer mittels einer im Bezugs- und/oder Kupplungspunkt des Anbaugeräts befindlichen Sensoranordnung erfasst und auf der von der Bedienerschnittstelle umfassten Anzeigeeinrichtung visualisiert wird. Die von der Sensoranordnung bereitgestellten Informationen werden hierbei über eine drahtlose Datenaustauschverbindung an die Bedienerschnittstelle übermittelt, wobei es sich bei der Sensoranordnung beispielsweise um ein Array lichtempfindlicher Halbleiterelemente handelt, die die Helligkeitsverteilung des auffallenden Lichts erfassen.

Das erfindungsgemäßen Verfahren wird im Folgenden anhand der beigefügten Zeichnungen näher erläutert. Dabei sind hinsichtlich ihrer Funktion übereinstimmende bzw. vergleichbare Komponenten mit denselben Bezugszeichen gekennzeichnet. Es zeigen:

Fig. 1    eine Veranschaulichung der Funktionsweise eines ersten Ausführungsbeispiels des erfindungsgemäßen Verfahrens beim Ankuppeln eines als Egge ausgebildeten Anbaugeräts,

Fig. 2    eine Veranschaulichung der Funktionsweise des ersten Ausführungsbeispiels des erfindungsgemäßen Verfahrens gemäß Fig. 1 beim Ankuppeln eines als Anhänger ausgebildeten Anbaugeräts,

Fig. 3    eine Veranschaulichung der Funktionsweise eines zweiten Ausführungsbeispiels des erfindungsgemäßen Verfahrens beim Ankuppeln eines als Anhänger ausgebildeten Anbaugeräts,

Fig. 4    eine Veranschaulichung der Funktionsweise des zweiten Ausführungsbeispiels des erfindungsgemäßen Verfahrens gemäß Fig. 3 beim Ankuppeln eines als Egge ausgebildeten Anbaugeräts, und

Fig. 5    eine beim Ankuppeln des Anbaugeräts gemäß Fig. 3 oder 4 vom landwirtschaftlichen Nutzfahrzeug zu durchfahrende Trajektorie, parametrisiert durch eine Bogenlänge s.

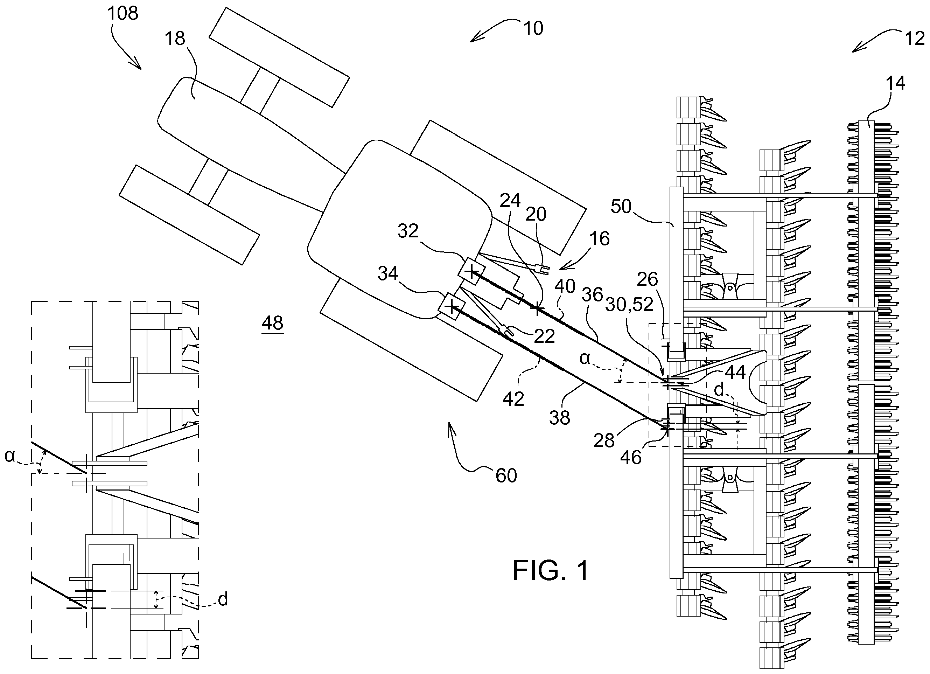

Fig. 1 veranschaulicht die Funktionsweise eines ersten Ausführungsbeispiels des erfindungsgemäßen Verfahrens zur Unterstützung eines Kupplungsvorgangs zwischen einem landwirtschaftlichen Nutzfahrzeug 10 und einem daran anzubringenden Anbaugerät 12.

Im vorliegenden Fall handelt es sich bei dem Anbaugerät 12 um eine Egge 14, die an einem heckseitigen Dreipunkt-Kraftheber 16 eines als Traktor 18 ausgebildeten landwirtschaftlichen Nutzfahrzeugs 10 eingehängt werden soll. Der Dreipunkt-Kraftheber 16 umfasst rechte und linke untere Anbringungsstellen 20, 22 sowie eine mittige obere Anbringungsstelle 24. Diese korrespondieren bezüglich Lage und Geometrie mit zugehörigen Kupplungspunkten 26, 28, 30 am Anbaugerät 12.

Im Bereich des Dreipunkt-Krafthebers 16 des landwirtschaftlichen Nutzfahrzeugs 10 ist eine erste und zweite Lasereinheit 32, 34 jeweils fest angebracht, wobei mittels der ersten Lasereinheit 32 ein erster Vertikallichtfächer 36 und mittels der zweiten Lasereinheit 34 ein zweiter Vertikallichtfächer 38 erzeugt wird. Wie sich Fig. 1 entnehmen lässt, fällt der erste Vertikallichtfächer 36 mit einer Mittellängsachse 40 des landwirtschaftlichen Nutzfahrzeugs 10 zusammen. Der zweite Vertikallichtfächer 38 hingegen verläuft zu diesem parallel versetzt durch die linke untere Anbringungsstelle 22 des Dreipunkt-Krafthebers 16, und zwar entlang einer Längsachse 42.

Die beiden Lasereinheiten 32, 34 arbeiten im sichtbaren Wellenlängenbereich, wobei es sich um gängige Linienlaser handelt, die eine linienhafte Lichtmarkierung 44, 46 in vertikaler Richtung auf die sie umgebenden Oberflächen, im vorliegenden Fall entlang des Erdbodens 48 sowie eines von dem Anbaugerät 12 umfassten Befestigungsrahmens 50, projizieren.

Die beiden Vertikallichtfächer 36, 38 werden durch entsprechendes Rangieren des landwirtschaftlichen Nutzfahrzeugs 10 gegenüber dem daran anzubringenden Anbaugerät 12 zunächst derart ausgerichtet, dass die mittels des ersten Vertikallichtfächers 36 projizierte vertikale Lichtmarkierung 44 mit einem mittigen Bezugspunkt 52 am Anbaugerät 12 zusammenfällt, wobei sich aus einem Versatz d der mittels des zweiten Vertikallichtfächers 38 projizierten vertikalen Lichtmarkierung 46 gegenüber dem linken unteren Kupplungspunkt 28 visuell auf den Grad einer Fehlstellung $\alpha$ des Kupplungspunkts 28 und damit (aufgrund deren fester räumlicher Beziehung zueinander) letztlich auch der übrigen Kupplungspunkte 26, 30 gegenüber den damit korrespondierenden Anbringungsstellen 20, 22, 24 am landwirtschaftlichen Nutzfahrzeug 10 schließen lässt. Zur Durchführung des Kupplungsvorgangs hat der Bediener das landwirtschaftliche Nutzfahrzeug 10 dann lediglich im Sinne einer Verringerung des sichtbaren Versatzes d ($\alpha \to 0$) zu rangieren, sodass dieser unmittelbar in die zum Ankuppeln des Anbaugeräts 12 vorgesehene Endposition geleitet wird.

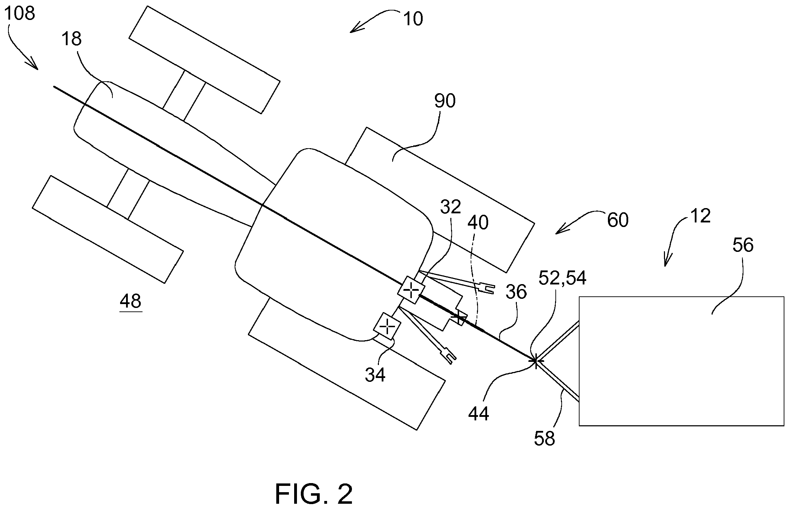

Entsprechend der Darstellung in Fig. 2 lässt sich das vorstehend beschriebene Verfahren mit reduzierter Funktionalität auch zum Ankuppeln eines mit einem einzelnen mittigen Kupplungspunkt 54 ausgestatteten Anbaugeräts 12, hier eines Anhängers 56 mit einer Deichsel 58, verwenden, indem die mittels des ersten Vertikallichtfächers 36 entlang der Mittellängsachse 40 projizierte vertikale Lichtmarkierung 44 als Orientierungshilfe bei der Durchführung des Kupplungsvorgangs genutzt wird. In diesem Fall wird das landwirtschaftliche Nutzfahrzeug 10 derart rangiert, dass der Kupplungspunkt 54, der zugleich den mittels der Lichtmarkierung 44 anzuvisierenden Bezugspunkt 52 bildet, stets mit der vertikalen Lichtmarkierung 46 in Übereinstimmung bleibt. Der Kupplungspunkt 54 ist hierbei ausgebildet, um an einer Kugelkopfkupplung oder einem Kupplungsmaul im Heckbereich 60 des landwirtschaftlichen Nutzfahrzeugs 10 angebracht zu werden. Um eine unerwünschte Blendung Außenstehender zu vermeiden, wird die nicht benötigte zweite Lasereinheit 34 abgeschaltet.

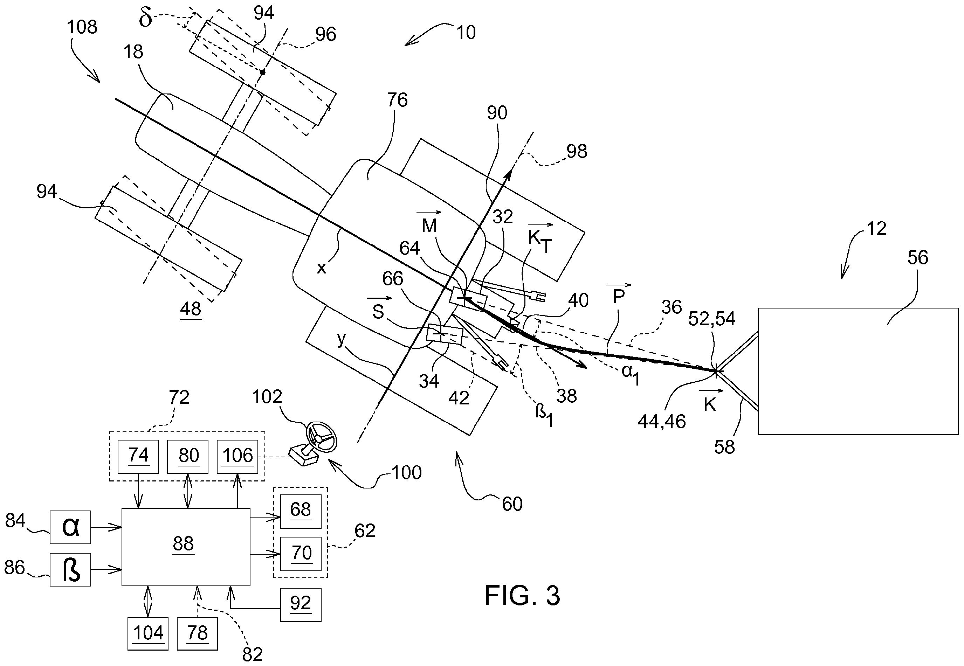

Fig. 3 veranschaulicht die Funktionsweise eines zweiten Ausführungsbeispiels des erfindungsgemäßen Verfahrens, das sich durch eine gegenüber dem ersten Ausführungsbeispiel verbesserte Unterstützung des Bedieners bzw. Fahrers beim Rangieren des landwirtschaftlichen Nutzfahrzeugs 10 auszeichnet.

Der wesentliche Unterschied gegenüber dem ersten Ausführungsbeispiel besteht darin, dass die beiden Vertikallichtfächer 36, 38 nicht etwa eine feste Orientierung bzw. Abstrahlrichtung aufweisen, sondern mittels einer Stelleinrichtung 62 um eine jeweilige Vertikalachse 64, 66 geschwenkt werden können.

Die Betätigung der aus einem ersten und zweiten elektrischen Stellmotor 68, 70 bestehenden Stelleinrichtung 62 erfolgt dabei manuell über eine von einer Bedienerschnittstelle 72 umfassten Bedieneinheit 74, die sich in einer Fahrerkabine 76 des landwirtschaftlichen Nutzfahrzeugs 10 befindet. Gemäß Fig. 3 bezieht sich der solchermaßen vorgebbare Schwenkwinkel $\alpha_1$, $\beta_1$ auf einen Winkel zwischen der Richtung des jeweiligen Vertikallichtfächers 36, 38 und der Mittellängsachse 40 bzw. der dazu parallel verlaufenden Längsachse 42 des landwirtschaftlichen Nutzfahrzeugs 10. Hierbei beträgt der Schwenkwinkel $\alpha_1$, $\beta_1$ jeweils 0 Grad, wenn der erste Vertikallichtfächer 36 mit der Mittellängsachse 40 bzw. der zweite Vertikallichtfächer 38 mit der dazu parallel verlaufenden Längsachse 42 fluchtet.

Zur Durchführung des Kupplungsvorgangs richtet der Bediener zunächst die mittels der beiden Vertikallichtfächer 36, 38 projizierten Lichtmarkierungen 44, 46 auf den Kupplungspunkt 54 des Anbaugeräts 12 aus, was durch entsprechende Betätigung der Stelleinrichtung 62 über die Bedieneinheit 74 erfolgt. Bei dem Anbaugerät 12 handelt es sich um einen Anhänger 56 mit einer Deichsel 58, sodass auch hier ein einzelner mittiger Kupplungspunkt 54 vorgesehen ist.

Die beiden Vertikallichtfächer 36, 38 werden im Kupplungspunkt 54 an der Deichsel 58 in Überschneidung gebracht. Ob dies der Fall ist, wird entweder visuell durch den Bediener oder mittels einer im Kupplungspunkt 54 befindlichen Sensoranordnung 78 erfasst und auf einer von der Bedienerschnittstelle 72 umfassten Anzeigeeinrichtung 80 visualisiert. Die von der Sensoranordnung 78 bereitgestellten Informationen werden in diesem Fall vom Anbaugerät 12 über eine drahtlose Datenaustauschverbindung 82 an die Bedienerschnittstelle 72 übermittelt, wobei es sich bei der Sensoranordnung 78 um ein Array lichtempfindlicher Halbleiterelemente handelt, die die Helligkeitsverteilung des auffallenden Lichts erfassen.

Anschließend werden die zugehörigen Schwenkwinkel $\alpha_1$, $\beta_1$ mittels erster und zweiter Winkelsensoren 84, 86 bestimmt und einer Kontrolleinheit 88 zur Auswertung zugeführt. Die Kontrolleinheit 88 berechnet davon ausgehend eine zum Ankuppeln des Anbaugeräts 12 vom landwirtschaftlichen Nutzfahrzeug 10 zu durchfahrende Trajektorie $\vec{P}$:

$$\vec{P}(s_p) = \begin{pmatrix} \dfrac{K_x - K_{Tx} - s_1}{s_1^2} s_p^{\,2} + s_p + K_{Tx} \\[2mm] \dfrac{K_y}{s_1^2} s_p^{\,2} \end{pmatrix} \quad \forall \quad s_1 = \left| \overrightarrow{K_T K} \right| \;\wedge\; s_p = [0; s_1]$$

mit

$$\vec{K} = \begin{pmatrix} K_x \\ K_y \end{pmatrix} = \vec{S} + k \begin{pmatrix} \cos(\beta_1) \\ \sin(\beta_1) \end{pmatrix} \quad \forall \quad k = \frac{\tan(\alpha_1)\,(S_x - M_x) - S_y - M_y}{\sin(\beta_1) - \tan(\alpha_1)\cos(\beta_1)} \quad ,$$

wobei sich sämtliche Koordinaten $\vec{P}$, $\vec{K}$, $\vec{K_T}$, $\vec{M}$, $\vec{S}$ auf ein fahrzeugfestes Bezugssystem 90 beziehen. Die Größe $s_p$ stellt hierbei die diskrete Parametrisierung der Bogenläge s dar, $s_p$ = f(s).

Die zu durchfahrende Trajektorie $\vec{P}$ wird von der Kontrolleinheit 88 durch Ansteuerung der von der Stelleinrichtung 62 umfassten elektrischen Stellmotoren 68, 70 mittels der beiden Vertikallichtfächer 36, 38 auf den Erdboden 48 projiziert.

Die Visualisierung der zu durchfahrenden Trajektorie $\vec{P}$ erleichtert es dem Bediener, das landwirtschaftliche Nutzfahrzeug 10 in die zum Ankuppeln des Anbaugeräts 12 vorgesehene Endposition zu überführen. Beim Rangieren hat dieser lediglich darauf zu achten, dass die mittels der beiden Vertikallichtfächer 36, 38 in deren Schnitt- bzw. Kreuzungsbereich projizierte vertikale Lichtmarkierung 44, 46 mit dem im vorliegenden Fall durch den Kupplungspunkt 54 gegebenen Bezugspunkt 52 am Anbaugerät 12 zusammenfällt.

Da vom Fahrersitz aus der Verlauf der auf den Erdboden projizierten Trajektorie $\vec{P}$ meist nicht vollständig einsehbar ist, wird diese einschließlich der am landwirtschaftlichen Nutzfahrzeug 10 vorgesehenen Anbringungsstellen 20, 22, 24 mittels einer Kamera 92 erfasst und auf der Anzeigeeinrichtung 80 der Bedienerschnittstelle 72 wiedergegeben. Die Kamera 92 befindet sich beispielsgemäß im Heckbereich 60 des landwirtschaftlichen Nutzfahrzeugs 10.

Da sich die Lage des landwirtschaftlichen Nutzfahrzeugs 10 gegenüber dem Kupplungspunkt 54 des Anbaugeräts 12 beim Rangieren stetig verändert, wird von der Kontrolleinheit 88 in regelmäßigen Zeitabständen $T_s$ eine aktualisierte Trajektorie $\vec{P}$ berechnet:

$$\vec{P} = \begin{bmatrix} \cos\left(\dfrac{T_s \tan(\delta)\, v}{l}\right) & \sin\left(\dfrac{T_s \tan(\delta)\, v}{l}\right) \\ -\sin\left(\dfrac{T_s \tan(\delta)\, v}{l}\right) & \cos\left(\dfrac{T_s \tan(\delta)\, v}{l}\right) \end{bmatrix} \begin{pmatrix} P_x z^{-1} - T_s v \\ P_y z^{-1} \end{pmatrix} .$$

Dabei bezeichnet die Größe $\delta$ einen an lenkbaren Rädern 94 des landwirtschaftlichen Nutzfahrzeugs 10 eingestellten Lenkwinkel, $l$ einen Längsabstand zwischen einer Vorder- und Hinterachse 96, 98 des landwirtschaftlichen Nutzfahrzeugs 10, $v$ die Fahrtgeschwindigkeit des landwirtschaftlichen Nutzfahrzeugs 10, und $P_x z^{-1}$, $P_y z^{-1}$ die Koordinaten der Trajektorie aus der vorhergehend durchgeführten Berechnung, indiziert mit $z^{-1}$.

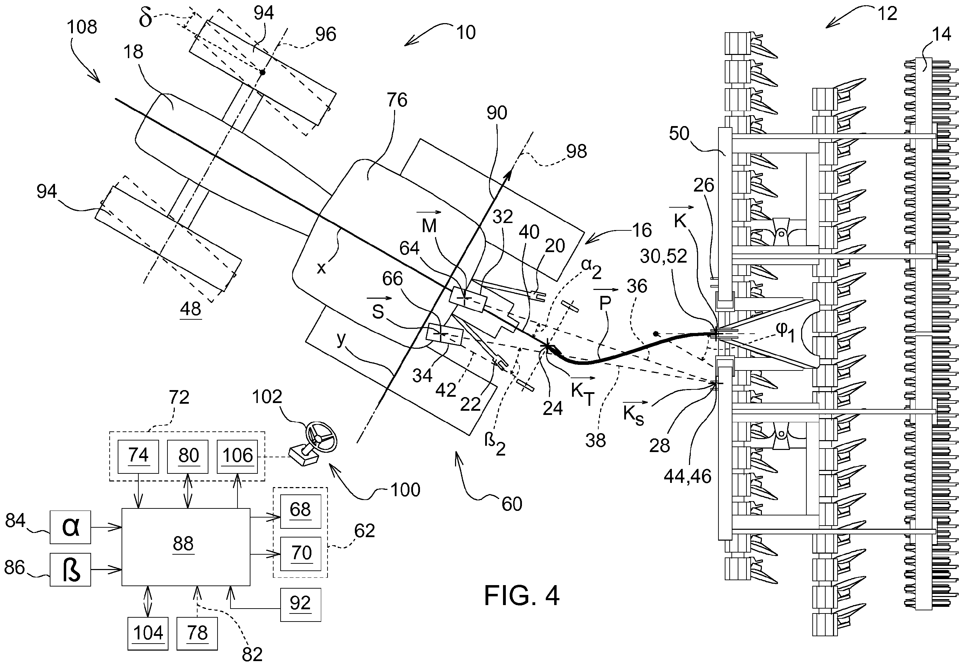

Fig. 4 veranschaulicht die Funktionsweise des zweiten erfindungsgemäßen Verfahrens für den Fall eines an dem Dreipunkt-Kraftheber 16 des landwirtschaftlichen Nutzfahrzeugs 10 anzubringenden Anbaugeräts 12, hier einer Egge 14.

Zur Durchführung des Kupplungsvorgangs richtet der Bediener zunächst die mittels der beiden Vertikallichtfächer 36, 38 projizierten Lichtmarkierungen 44, 46 auf den durch den mittigen oberen Kupplungspunkt 30 gebildeten Bezugspunkt 52 des Anbaugeräts 12 aus, was durch entsprechende Betätigung der Stelleinrichtung 62 über die Bedieneinheit 74 erfolgt.

Danach wird der linke untere Kupplungspunkt 28 anvisiert, indem der Bediener die mittels der beiden Vertikallichtfächer 36, 38 projizierten Lichtmarkierungen 44, 46 auf diesen ausrichtet. Anschließend werden mittels der beiden Winkelsensoren 84, 86 die zugehörigen Schwenkwinkel $\alpha_2$, $\beta_2$ erfasst, um auf Grundlage einer modifizierten Berechnung die nun zu durchfahrende Trajektorie $\vec{P}$ zu bestimmen:

$$\vec{P}(s_p) = \begin{pmatrix} \dfrac{-2K_x + \cos(\varphi_1)\,s_1 + s_1 + 2K_{Tx}}{s_1^3} s_p^3 + \dfrac{3K_x - \cos(\varphi_1)\,s_1 - 2s_1 - 3K_{Tx}}{s_1^2} s_p^2 + s_p + K_{Tx} \\ \dfrac{-2K_y + \sin(\varphi_1)\,s_1}{s_1^3} s_p^3 + \dfrac{3K_x - \sin(\varphi_1)\,s_1}{s_1^2} s_p^2 \end{pmatrix}$$

$$\forall\; s_1 = \left|\overrightarrow{K_T K}\right| \quad \wedge \quad s_p = [0; s_1] \quad \wedge \quad \varphi_1 = \arctan\left(\dfrac{K_x - K_{Sx}}{K_{Sy} - K_y}\right)$$

mit

$$\overrightarrow{K_S} = \begin{pmatrix} K_{Sx} \\ K_{Sy} \end{pmatrix} = \vec{S} + k_s \begin{pmatrix} \cos(\beta_2) \\ \sin(\beta_2) \end{pmatrix} \quad \forall \quad k_s = \dfrac{\tan(\alpha_2)\,(S_x - M_x) - S_y - M_y}{\sin(\beta_2) - \tan(\alpha_2)\cos(\beta_2)} ,$$

wobei sich die Koordinate $\overrightarrow{K_S}$ auf das fahrzeugfeste Bezugssystem 90 bezieht.

Die zu durchfahrende Trajektorie $\vec{P}$ wird auch hier von der Kontrolleinheit 88 durch Ansteuerung der von der Stelleinrichtung 62 umfassten elektrischen Stellmotoren 68, 70 mittels der beiden Vertikallichtfächer 36, 38 auf den Erdboden 48 projiziert, wobei von der Kontrolleinheit 88 in regelmäßigen Zeitabständen $T_s$ eine Aktualisierung der Trajektorie $\vec{P}$ durchgeführt wird:

6

$$\vec{P} = \begin{bmatrix} \cos\left(\dfrac{T_s \tan(\delta)\,v}{l}\right) & \sin\left(\dfrac{T_s \tan(\delta)\,v}{l}\right) \\ -\sin\left(\dfrac{T_s \tan(\delta)\,v}{l}\right) & \cos\left(\dfrac{T_s \tan(\delta)\,v}{l}\right) \end{bmatrix} \begin{pmatrix} P_x z^{-1} - T_s v \\ P_y z^{-1} \end{pmatrix} \ .$$

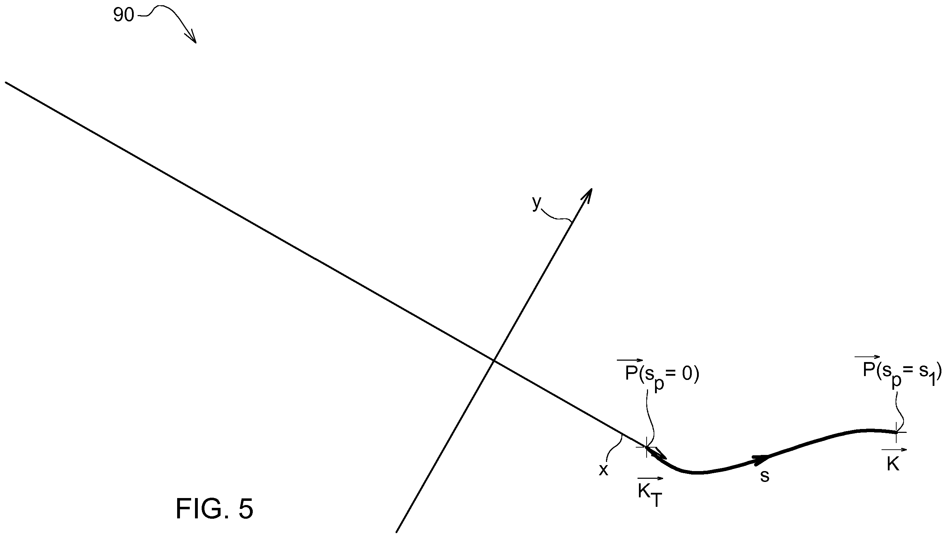

Optional wird ausgehend von der in Zusammenhang mit Fig. 3 oder 4 berechneten Trajektorie $\overline{P}$ ein fahrtgeschwindigkeitsabhängig einzuschlagender Lenkwinkel $\delta$ an den lenkbaren Rädern 94 des landwirtschaftlichen Nutzfahrzeugs 10 abgeleitet. Hierzu wird von der Kontrolleinheit 88 die zu durchfahrende Trajektorie zunächst durch die Bogenlänge $s$ diskret parametrisiert (siehe Fig. 5), $s_p = f(s)$,

$$s = s z^{-1} + \frac{T_s}{2}\left(v z^{-1} + v\right) \quad \forall \quad s(0) = 0 \quad ,$$

$$s_p(n) = \sum_{i=1}^{n} \sqrt{\left[P_x\left(\Delta s_p i\right) - P_x\left(\Delta s_p(i-1)\right)\right]^2 + \left[P_y\left(\Delta s_p i\right) - P_y\left(\Delta s_p(i-1)\right)\right]^2}$$

$$\exists!\,n\colon \ s_p(n) \le s \ \wedge \ s_p(n+1) > s \ \ .$$

Daraus ergibt sich der einzustellende Lenkwinkel $\delta$ zu

$$\delta = \arctan\left(l\,\frac{\dfrac{\partial P_x}{\partial s_p}\dfrac{\partial^2 P_y}{\partial^2 s_p} - \dfrac{\partial P_y}{\partial s_p}\dfrac{\partial^2 P_x}{\partial^2 s_p}}{\sqrt{\left(\dfrac{\partial P_x}{\partial s_p}\right)^2 + \left(\dfrac{\partial P_y}{\partial s_p}\right)^2}}\right) \ .$$

Die Beeinflussung des Lenkwinkels $\delta$ erfolgt über eine in der Fahrerkabine 76 des landwirtschaftlichen Nutzfahrzeugs 10 vorgesehene Lenkhandhabe 100 in Gestalt eines Lenkrads 102 oder mittels einer autonomen Lenkeinrichtung 104, die zur Durchführung eines GPS-gesteuerten Betriebs des landwirtschaftlichen Nutzfahrzeugs 10 vorgesehen ist. Während der Durchführung des Kupplungsvorgangs wird die Fahrtgeschwindigkeit $v$ entweder manuell seitens des Bedieners vorgegeben oder aber bedienerunabhängig im Rahmen einer mit dem erfindungsgemäßen Verfahren verknüpften automatisierten Kupplungsassistenzfunktion.

Auf Grundlage des abgeleiteten Lenkwinkels $\delta$ werden dann entweder über die Bedienerschnittstelle 72 optische, akustische und/oder haptische Lenkempfehlungen ausgegeben oder aber es wird der Lenkwinkel $\delta$ fahrtgeschwindigkeitsabhängig durch Ansteuerung der autonomen Lenkeinrichtung 104 nach Initiierung der automatisierten Kupplungsassistenzfunktion bedienerunabhängig eingestellt.

Die Lenkempfehlungen werden optisch über die Anzeigeeinrichtung 80 der Bedienerschnittstelle 72 in Form von Symbolen oder Klartexthinweisen dargestellt, daneben ist eine Ausgabe von Signaltönen, die abhängig von einer Abweichung von der zu durchfahrenden Trajektorie moduliert werden, oder auch eine Aufschaltung einer haptischen Rückmeldung an der Lenkhandhabe 100 vorgesehen. In letzterem Fall weist die Bedienerschnittstelle 72 einen mit der Lenkhandhabe 100 zusammenwirkenden Momentengeber 106 auf, mittels dessen ein einer Abweichung von der zu durchfahrenden Trajektorie entgegenwirkender Lenkwiderstand an der Lenkhandhabe 100 aufgebaut wird.

Die in Fig. 1 bis 4 dargestellten Anbaugeräte 12 sollen lediglich beispielhaften Charakter haben, das erfindungsgemäße Verfahren ist ebenso gut auch für jedes andere, an einer einzelnen Anbringungsstelle oder an einem Dreipunkt-Kraftheber 16 anbringbare Anbau- oder Zusatzgeräte 12 geeignet. Denkbar sind auch Anbau- oder Zusatzgeräte 12, die sich an einer Zweipunktkupplung des landwirtschaftlichen Nutzfahrzeugs 10 anbringen lassen.

Der Vollständigkeit halber sei angemerkt, dass sich das erfindungsgemäße Verfahren zur Anbringung beliebiger Anbaugeräte 12 nicht nur im Heckbereich 60, sondern ebenso gut auch im Frontbereich 108 des landwirtschaftlichen Nutzfahrzeugs 10 einsetzen lässt.

**Patentansprüche**

1. Verfahren zur Unterstützung eines Kupplungsvorgangs zwischen einem landwirtschaftlichen Nutzfahrzeug (10) und einem daran anzubringenden Anbaugerät (12), bei dem mittels einer im sichtbaren Wellenlängenbereich arbeitenden fahrzeugseitigen ersten Lasereinheit (32) ein erster Vertikallichtfächer (36) und mittels einer im sichtbaren Wellenlängenbereich arbeitenden fahrzeugseitigen zweiten Lasereinheit (34) ein zweiter Vertikallichtfächer (38) erzeugt wird, wobei die Vertikallichtfächer (36, 38) zur Durchführung des Kupplungsvorgangs mit einem Kupplungspunkt (28, 30; 54) und/oder einem den Kupplungspunkt (30; 54) charakterisierenden Bezugspunkt (52) am Anbaugerät (12) in Übereinstimmung gebracht werden, um durch Anvisieren des Bezugs- und/oder Kupplungspunkts (52; 28, 30; 54) am Anbaugerät (12) eine zur Durchführung des Kupplungsvorgangs einzunehmende bzw. zu messende Lage des Bezugs- und/oder Kupplungspunkts (52; 28, 30; 54) relativ zu einer damit korrespondierenden Bezugs- und/oder Anbringungsstelle (20, 22, 24) am landwirtschaftlichen Nutzfahrzeug (10) mittels einer entlang des Erdbodens (48) sowie im Bereich des Bezugs- und/oder Kupplungspunkts (52; 28, 30; 54) am Anbaugerät (12) projizierten vertikalen Lichtmarkierung (44, 46) visuell erkennbar zu machen.

2. Verfahren nach Anspruch 1, **dadurch gekennzeichnet, dass** die beiden Vertikallichtfächer (36, 38) derart abgestrahlt werden, dass der erste Vertikallichtfächer (36) mit einer Mittellängsachse (40) des landwirtschaftlichen Nutzfahrzeugs (10) zusammenfällt und der zweite Vertikallichtfächer (38) zu diesem parallel versetzt durch eine davon beabstandete Anbringungsstelle (22) des landwirtschaftlichen Nutzfahrzeugs verläuft.

3. Verfahren nach Anspruch 1, **dadurch gekennzeichnet, dass** der erste und/oder zweite Vertikallichtfächer (36, 38) um eine jeweilige Vertikalachse (64, 66) geschwenkt wird.

4. Verfahren nach Anspruch 3, **dadurch gekennzeichnet, dass** die beiden Vertikallichtfächer (64, 66) im Bezugspunkt (52) und/oder Kupplungspunkt (28, 30; 54) am Anbaugerät (12) in Überschneidung gebracht werden, wobei die zugehörigen Schwenkwinkel ($\alpha_1$, $\beta_1$, $\alpha_2$, $\beta_2$) der Vertikallichtfächer (36, 38) erfasst werden und davon ausgehend eine zum Ankuppeln des landwirtschaftlichen Nutzfahrzeugs (10) zu durchfahrende Trajektorie ($\vec{P}$) berechnet wird.

5. Verfahren nach Anspruch 4, **dadurch gekennzeichnet, dass** die zu durchfahrende Trajektorie ($\vec{P}$) mittels der beiden Vertikallichtfächer (36, 38) auf den Erdboden (48) projiziert wird.

6. Verfahren nach Anspruch 5, **dadurch gekennzeichnet, dass** die auf den Erdboden (48) projizierte Trajektorie ($\vec{P}$) mittels einer Kamera (92) erfasst und auf einer Anzeigeeinrichtung (80) einer Bedienerschnittstelle (72) wiedergegeben wird.

7. Verfahren nach Anspruch 4, **dadurch gekennzeichnet, dass** aus der berechneten Trajektorie ($\vec{P}$) ein fahrtgeschwindigkeitsabhängig einzuschlagender Lenkwinkel ($\delta$) an lenkbaren Rädern (94) des landwirtschaftlichen Nutzfahrzeugs (10) abgeleitet wird.

8. Verfahren nach Anspruch 7, **dadurch gekennzeichnet, dass** auf Grundlage des abgeleiteten Lenkwinkels ($\delta$) entweder über eine Bedienerschnittstelle (72) optische, akustische und/oder haptische Lenkempfehlungen ausgegeben werden oder aber der Lenkwinkel ($\delta$) fahrtgeschwindigkeitsabhängig durch Ansteuerung einer autonomen Lenkeinrichtung (104) bedienerunabhängig eingestellt wird.

9. Verfahren nach wenigstens einem der vorhergehenden Ansprüche 1 bis 8, **dadurch gekennzeichnet, dass** der erste und/oder zweite Vertikallichtfächer (36, 38) mittels einer im Bezugs- und/oder Kupplungspunkt (28, 30; 54) des Anbaugeräts (12) befindlichen Sensoranordnung (78) erfasst und auf einer von der Bedienerschnittstelle (72) umfassten Anzeigeeinrichtung (80) visualisiert wird.

10. Verwendung eines Verfahrens nach wenigstens einem der vorhergehenden Ansprüche 1 bis 9 zur Durchführung eines Kupplungsvorgangs zwischen einem als Traktor (18) ausgebildeten landwirtschaftlichen Nutzfahrzeug (10) und einem daran anzubringenden Anbau- oder Zusatzgerät (12).

**Claims**

1. Method for assisting a coupling process between an agricultural utility vehicle (10) and an implement (12) which is to be attached thereto, during which a first vertical light fan (36) is generated by means of a first, vehicle-mounted laser unit (32) operating in the visible wavelength range, and a second vertical light fan (38) is generated by means of a second, vehicle-mounted laser unit (34) operating in the visible wavelength range, wherein, in order to carry out the coupling process with a coupling point (28, 30; 54) and/or a reference point (52), characterizing the coupling point (30; 54), on the implement (12), the vertical light fans (36, 38) are moved into congruence so that a position of the reference point and/or coupling point (52; 28, 30; 54), to be assumed or measured in order to carry out the coupling process, on the agricultural utility vehicle (10) is made visible by means of a vertical light marking (44, 46) which is projected along the ground (48) and in the region of the reference point and/or coupling point (52; 28, 30; 54) on the implement (12).

2. Method according to Claim 1, **characterized in that** the two vertical light fans (36, 38) are irradiated in such a way that the first vertical light fan (36) coincides with a central longitudinal axis (40) of the agricultural utility vehicle (10), and the second vertical light fan (38) runs offset in parallel therewith through an attachment point (22), spaced apart therefrom, of the agricultural utility vehicle.

3. Method according to Claim 1, **characterized in that** the first and/or second vertical light fans (36, 38) are pivoted about a respective vertical axis (64, 66).

4. Method according to Claim 3, **characterized in that** the two vertical light fans (64, 66) are made to overlap at the reference point (52) and/or coupling point (28, 30; 54) on the implement (12), wherein the associated pivoting angles ($\alpha_1$, $\beta_1$, $\alpha_2$, $\beta_2$) of the vertical light fans (36, 38) are sensed, and a trajectory ($\vec{P}$) which is to be passed through in order to couple the agricultural utility vehicle (10) is calculated on the basis thereof.

5. Method according to Claim 4, **characterized in that** the trajectory ($\vec{P}$) to be passed through is projected onto the ground (48) by means of the two vertical light fans (36, 38).

6. Method according to Claim 5, **characterized in that** the trajectory ($\vec{P}$) which is projected onto the ground (48) is sensed by means of a camera (92) and is reproduced on a display device (80) of an operator control interface (72).

7. Method according to Claim 4, **characterized in that** a steering angle ($\delta$) which is to be adopted in accordance with the velocity, at steerable wheels (94) of the agricultural utility vehicle (10) is derived from the calculated trajectory ($\vec{P}$).

8. Method according to Claim 7, **characterized in that** either optical, acoustic and/or haptic steering recommendations are output on the basis of the derived steering angle ($\delta$) via an operator control interface (72) or else the steering angle ($\delta$) is set in accordance with the velocity by actuating an autonomous steering device (104) independently of the operator.

9. Method according to at least one of the preceding Claims 1 to 8, **characterized in that** the first and/or second vertical light fans (36, 38) are/is sensed by means of a sensor arrangement (78) which is located at the reference point and/or coupling point (28, 30; 54) of the implement (12) and is displayed on a display device (80) which is included in the operator control interface (72).

10. Use of a method according to at least one of the preceding Claims 1 to 9 for carrying out a coupling process between an agricultural utility vehicle (10) which is embodied as a tractor (18), and an implement or accessory (12) which can be attached thereto.

**Revendications**

1. Procédé de support d'un processus d'attelage entre un véhicule agricole (10) et un outil porté (12) devant y être fixé, dans lequel un premier éventail de lumière vertical (36) est généré côté véhicule au moyen d'une première unité à laser (32), fonctionnant dans la gamme des longueurs d'onde visibles, et un deuxième éventail de lumière vertical (38) est généré côté véhicule au moyen d'une deuxième unité à laser (34), fonctionnant dans la gamme des longueurs d'onde visibles, dans lequel les éventails de lumière verticaux (36, 38) sont amenés à coïncider avec un point d'attelage (28, 30 ; 54) et/ou un point de référence (52) caractérisant le point d'attelage (30 ; 54) sur l'outil porté (12), afin de rendre visuellement reconnaissable, pour réaliser le processus d'attelage, par observation du point de référence et/ou d'attelage (52 ; 28, 30 ; 54) à l'outil porté (12), une position à adopter ou à mesurer du point de référence et/ou d'attelage (52 ; 28, 30 ; 54) par rapport à un point de référence et/ou de montage (20, 22, 24) correspondant sur le véhicule utilitaire agricole (10) au moyen d'un marquage de lumière vertical (44, 46) projeté le long du sol (48) et dans la zone du point de référence et/ou d'attelage (52 ; 28, 30 ; 54) sur l'outil porté (12).

2. Procédé selon la revendication 1, **caractérisé en ce que** les deux éventails de lumière verticaux (36, 38) sont rayonnés de telle manière que le premier éventail de lumière vertical (36) coïncide avec un axe longitudinal central (40) du véhicule utilitaire agricole (10) et que le deuxième éventail de lumière vertical (38) s'étende de manière décalée parallèlement à celui-ci et passe par un point de montage (22), espacé de celui-ci, du véhicule utilitaire agricole.

3. Procédé selon la revendication 1, **caractérisé en ce que** le premier et/ou le deuxième éventail de lumière vertical (36, 38) est amené à pivoter autour d'un axe vertical respectif (64, 66).

4. Procédé selon la revendication 3, **caractérisé en ce que** les deux éventails de lumière verticaux (64, 66) se coupent au point de référence (52) et/ou au point d'attelage (28, 30 ; 54) sur l'outil porté (12), dans lequel les angles de pivotement associés ($\alpha_1$, $\beta_1$, $\alpha_2$, $\beta_2$) des éventails de lumière verticaux (36, 38) sont détectés et une trajectoire ($\vec{P}$) à parcourir pour l'attelage du véhicule utilitaire agricole (10) est calculée à partir de ceux-ci.

5. Procédé selon la revendication 4, **caractérisé en ce que** la trajectoire ($\vec{P}$) à parcourir est projetée sur le sol (48) au moyen des deux éventails de lumière verticaux (36, 38).

6. Procédé selon la revendication 5, **caractérisé en ce que** la trajectoire ($\vec{P}$) projetée sur le sol (48) est captée au moyen d'une caméra (92) et reproduite sur un dispositif d'affichage (80) d'une interface opérateur (72) .

7. Procédé selon la revendication 4, **caractérisé en ce qu'**un angle de braquage ($\delta$) à adopter sur les roues directrices (94) du véhicule utilitaire agricole (10) en fonction de la vitesse de déplacement est déduit de la trajectoire calculée ($\vec{P}$).

8. Procédé selon la revendication 7, **caractérisé en ce que**, sur la base de l'angle de braquage déduit ($\delta$), soit des instructions de braquage optiques, acoustiques et/ou haptiques sont délivrées par l'intermédiaire d'une interface utilisateur (72), soit l'angle de braquage ($\delta$) est réglé indépendamment de l'opérateur en fonction de la vitesse de déplacement par commande d'un dispositif de braquage autonome (104).

9. Procédé selon au moins l'une des revendications précédentes 1 à 8, **caractérisé en ce que** le premier et/ou le deuxième éventail de lumière vertical (36, 38) est détecté au moyen d'un système de capteurs (78) situé au point de référence et/ou d'attelage (28, 30 ; 54) de l'outil porté (12) et est visualisé sur un dispositif d'affichage (80) que comprend l'interface utilisateur (72) .

10. Utilisation d'un procédé selon au moins l'une des revendications 1 à 9 précédentes pour réaliser un processus d'attelage entre un véhicule utilitaire agricole (10) se présentant sous la forme d'un tracteur (18) et un outil porté ou auxiliaire (12) devant y être fixé.

FIG. 1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100212170 A1
- EP 1238577 A1